Europäisches Patentamt

European Patent Office

Office européen des brevets

(19)

(11) Publication number : **0 531 944 A1**

# (12) EUROPEAN PATENT APPLICATION

(21) Application number : **92115353.2**

(22) Date of filing : **08.09.92**

(51) Int. Cl.$^5$ : **B60R 1/06**

(30) Priority : **10.09.91 IT TO910691**

(43) Date of publication of application :
**17.03.93 Bulletin 93/11**

(84) Designated Contracting States :
**AT BE CH DE DK ES FR GB GR IE LI LU MC NL
PT SE**

(71) Applicant : **GILARDINI S.p.A.**
**Via Cuneo No. 20**
**I-10152 Turin (IT)**

(72) Inventor : **Lupo, Elio**
**Via Susa, 74**
**I-10093 Collegno (IT)**

(74) Representative : **Cerbaro, Elena et al**
**c/o Studio Torta, Via Viotti 9**
**I-10121 Torino (IT)**

(54) **An exterior rear view mirror for a motor vehicle.**

(57)    A rear view mirror includes an outer body (2), a reflective plate (3) housed in the outer body, an arm (11) for fixing the outer body to the bodywork (13) of a motor vehicle, a support and orientation module (5) for the reflective plate (3) and a fold-back module (10) interposed between the fixing arm (11) and the support and orientation module (5) for enabling the outer body (2) and the reflective plate (3) to pivot about a fold-back axis (14). The centre (15) of the reflective plate (3) is positioned at a predetermined distance from the fold-back axis (14) and, precisely, the distance A between the centre (15) and the fold-back axis (14) along a transverse axis (X) of the vehicle is equal to A = 100mm ± 10%, the distance B between the centre (15) and a plane (16) perpendicular to the fold-back axis (14) and defined by opposing surfaces of the fold-back module (10) and of the fixing arm (11) is equal to B = 50mm ± 20%, and the distance C between the plane of the reflective plate (3) and the fold-back axis (14) is equal to C = 45mm ± 20%.

Fig.1

Fig.2

EP 0 531 944 A1

The present invention relates to an exterior rear view mirror for a motor vehicle.

As is known, in the design of rear view mirrors for motor vehicles, the designer of the entire vehicle currently sets out specifications regarding the shape, size and technical characteristics of the mirror, such as the field of visibility and the type of articulation and orientation of the mirror, and the components of the mirror are in fact designed as and when required in order to comply with these specifications.

In practice, this procedure necessitates the special design of each operational unit of the mirror (fold-back mechanism, support and orientation members for the reflective plate) for each model of motor vehicle in order to adapt the dimensions and constructional details of the components of these operational units to the specified operational and esthetic requirements and may therefore make it difficult to comply with size specifications, as well as being very expensive.

The object of the present invention is to provide a standardized rear mirror with an internal structure which consists of a few standard elements with the same dimensions whatever the outer shape of the mirror itself, and which can be used in the design of rear view mirrors having different outer shapes, leaving the designer a wide choice of design possibilities while satisfying current regulations. In particular, the internal structure of a mirror according to the invention must be able to be assembled with different outside elements so as to provide rear mirrors whose esthetic and operational characteristics are substantially the same as those of prior art mirrors.

According to the present invention, an exterior rear view mirror for a motor vehicle is provided, including an outer body, a reflective plate housed within the said outer body, means for fixing the mirror to the bodywork of a motor vehicle, and orientable support means for the said reflective plate housed in the said outer body, the said support means being interposed between the reflective plate and the said fixing means to enable the said outer body and the said reflective plate to pivot about a fold-back axis, characterised in that the centre of the said reflective plate is positioned at a predetermined distance from the said fold-back axis, the distance A between the said centre and the said fold-back axis along a transverse axis of the vehicle being equal to A = 100mm ± 10%, the distance between the said centre and a plane perpendicular to the said fold-back axis and defined by opposing surfaces of the said support means and the said fixing means being equal to B = 50mm ± 20% and the distance C between the plane of the said reflective plate and the said fold-back axis being equal to C = 45mm ± 20%.

For a better understanding of the present invention, preferred embodiments will now be described, purely as non-limitative examples, with reference to the appended drawings, in which:

Figure 1 is a schematic frontal view of the group of elements making up the internal structure of a mirror according to the invention;

Figure 2 is a view from above of the group of Figure 1;

Figure 3 is a cross-section of part of the group of Figure 1;

Figure 4 is a frontal view of a variant of Figure 3;

Figure 5 is a cross-section of a further variant of Figure 3;

Figure 6 is a frontal view, with the cover removed, of a second part of the group of Figure 1;

Figure 7 is a cross-section of Figure 6; and

Figure 8 is a frontal view of a variant of Figure 6.

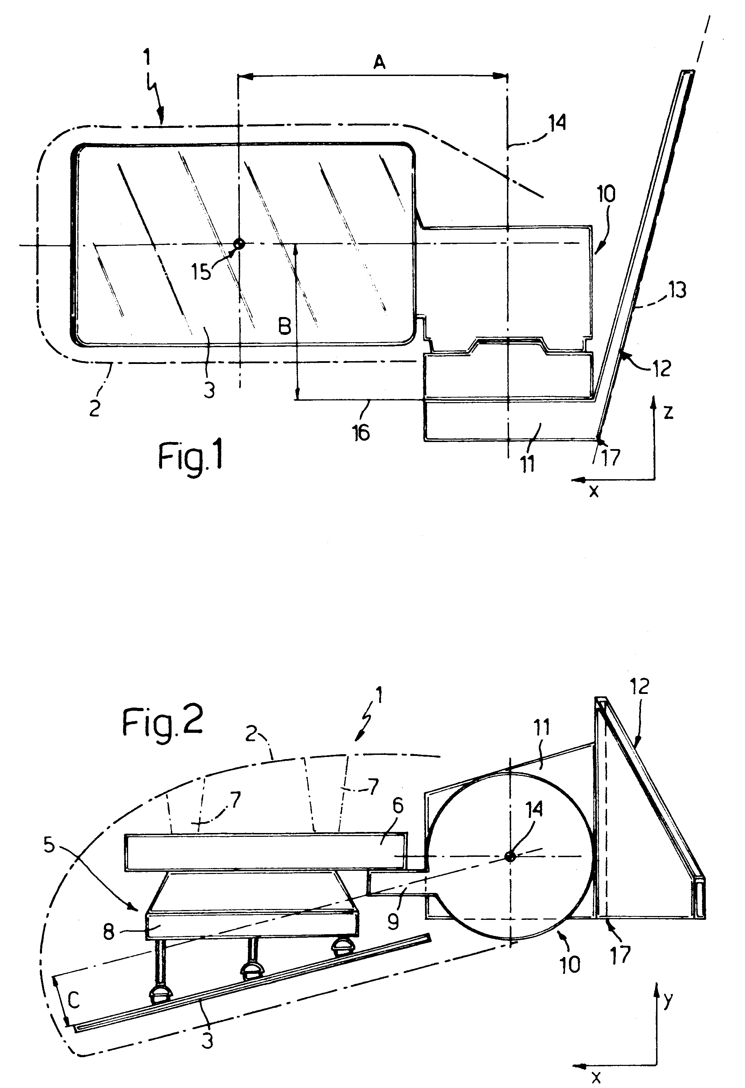

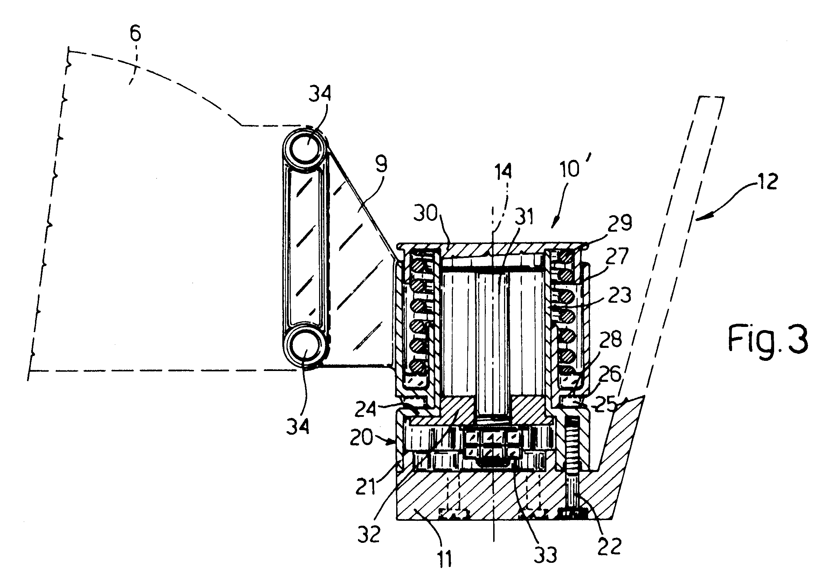

Reference is made to Figures 1 and 2 which show schematically a standardized mirror according to the invention. Specifically, the mirror 1 includes a hollow, oblong outer body 2 (schematically indicated by a chain line), which houses a reflective plate 3 facing an opening (not shown in detail) in the body 2 itself and fixed to a support and orientation module 5 which includes a support plate 6 fixed to the outer body 2 by projections 7. The plate 6 carries a device 8 for adjusting the position of the reflective plate 3 and is fixed to a bracket 9 of a fold-back module 10 adapted to allow the plate 6, together with the body 2, the reflective plate 3 and the orientation module 5, to pivot relative to a horizontal arm 11 of a support element 12 adapted for fixing to the bodywork of a motor vehicle.

In particular, the mirror 1 has only one fold-back axis 14 (Figure 1), a centre 15 and an articulation reference plane 16, the latter being defined as the plane separating opposing surfaces of the fold-back module 10 and the arm 11 and extending perpendicular to the axis 14. According to the invention, the axis 14, the centre 15 and the plane 16 are placed at standard distances from each other, the same for all mirrors, whatever their outer shape and the model of motor vehicle on which they are to be mounted. To be precise, in a cartesian reference system in which the X axis is parallel to the transverse axis of the vehicle, the Y axis is parallel to the longitudinal axis of the vehicle, and Z coincides with the vertical, the distance between the fold-back axis 14 and the projection of the centre 15 on the X axis, indicated A in Figure 1, is equal to 100mm ± 10%, preferably 100mm ± 5mm, the distance between the plane of the reflective plate 3 and the axis 14, indicated C in Figure 2, is equal to 45mm ± 10%, preferably 45mm ± 5mm, and the distance between the centre 15 and the reference plane 16, along the Z axis, indicated B in Figure 1, is equal to 50mm ± 20%, preferably 50mm ± 5mm. In particular, research carried out by the applicant has demonstrated that, with these measurements, by suitable modification of the dimensions of the arm 11 and hence of the position of the fold-back axis 14 relative to the point of reference 17 of the mounting position of the mirror on the vehicle, it is possible to mount the standard mirror according to the invention exactly in the same position as that in which current mirrors are mounted (the coordinates of the point 17 are the same), providing fields of view that are not too different from current ones and respecting restrictions regarding the folding back of the mirror and type approvability, and providing a standard five-degree upwards inclination of the reflector unit, which approximates to the inclination of most prior art mirrors.

The invention of a standard-measurement mirror for any vehicle makes it possible to manufacture its internal structure in predetermined modules, which are mutually interchangeable according to the desired operational characteristics. In particular, as described above, the internal structure of the standard mirror described is divided essentially into two modules, the fold-back module 10 and the orientation module 5. As the current preference is for mirrors with mechanical or electric fold-back mechanisms and with electric orientation or mechanical orientation by means of Bowden cables, the illustrated mirror foresees the provision of four standard modules, specifically two fold-back modules 10' and 10", manual and electric respectively, and two orientation modules 5' and 5", operated electrically and mechanically by Bowden cable respectively. According to one aspect of the invention, the two fold-back modules 10' and 10" are interchangeable, as are the two orientation modules 5' and 5"; as a result, with these modules it is possible to make four mirrors with different methods of controlling the folding back and the orientation of the reflective plate.

In a first preferred embodiment (schematically illustrated in Figures 1 and 2), the support plate 6 is incorporated in the orientation module 5' and 5" and is fixed to the bracket 9 when the mirror is assembled; according to a second embodiment, the plate is part of the fold-back module 10' and 10" and is fixed to the device 8 for adjusting the position of the reflective plate when the mirror is assembled.

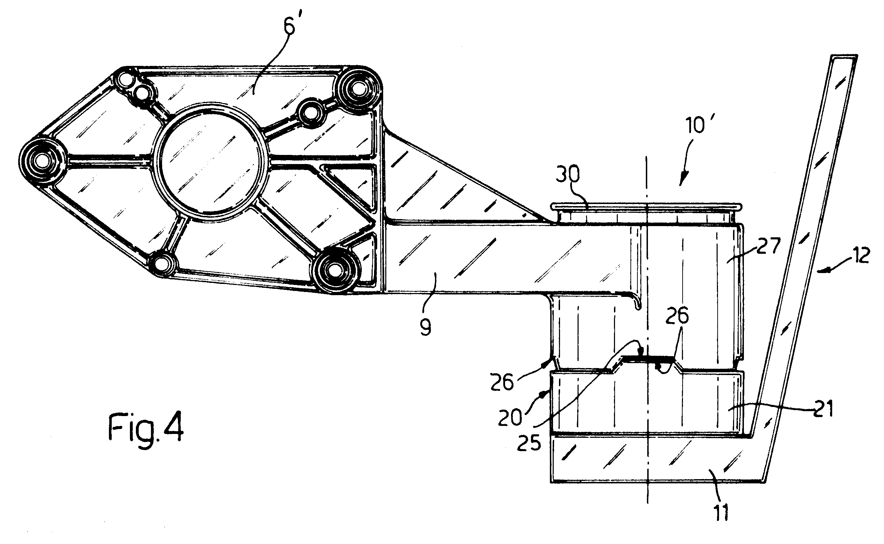

Figure 3 shows an example of a manual fold-back module 10'. As shown in the drawing, the module 10' includes a tubular-shaped adaptor 20, with a broad base 21 screwed to the arm 11 by screws 22 and a narrower portion 23 joined to the base 21 by an annular wall 24. On the annular wall 24, the base 21 has projections 25 (see also Figure 4) shaped to fit into corresponding recesses 26 in a hollow cylindrical body 27 that surrounds the narrow portion 23 and has an annular base wall 28 facing the annular wall 24 of the adaptor 20. Between the cylindrical body 27 and the portion 23 is a coil spring 29 which bears at one end against the base wall 28 and at the other against a cap 30 which closes the top of the cylindrical body 27. The cap 30 carries a screw element 31 protruding from the cap 30 itself and extending inside the narrow portion 23 of the adaptor 20. The end of the screw element 31, which passes through a disc 32 abutting the annular wall 24, is screwed into a nut 33 in order to clamp the cap 30 against the end of the narrow portion 23. In this way, in the absence of forces acting on the mirror in its fold-back direction, the spring 29 keeps the projections 25 of the annular wall 24 in engagement with the recesses 26 in the cylindrical body 27, determining the stable angular positions of the mirror 1 while, when forces act to fold back the mirror, the elasticity of the spring 29 permits the cylindrical body 27 to move axially upwards, the disengagement of the cavities 26 from the projections 25 and the pivoting of the cylindrical body 27 into the next stable angular position, thus enabling the mirror to fold back.

The cylindrical body 27 is fixed to the bracket 9 which, in the embodiment of Figure 3, has eyelets 34 at its end opposite the cylindrical body 27 for fixing it, by screws not illustrated, to the support plate 6 (shown by a broken line in Figure 3). On the other hand, in the embodiment of Figure 4, the cylindrical body 27 is formed in one piece with the support plate 6', through the bracket 9, and in this case, as already mentioned, the device 8 for adjusting the position of the reflective plate must be fixed to the support plate 6' during assembly, according to the type of orientation control desired in each case.

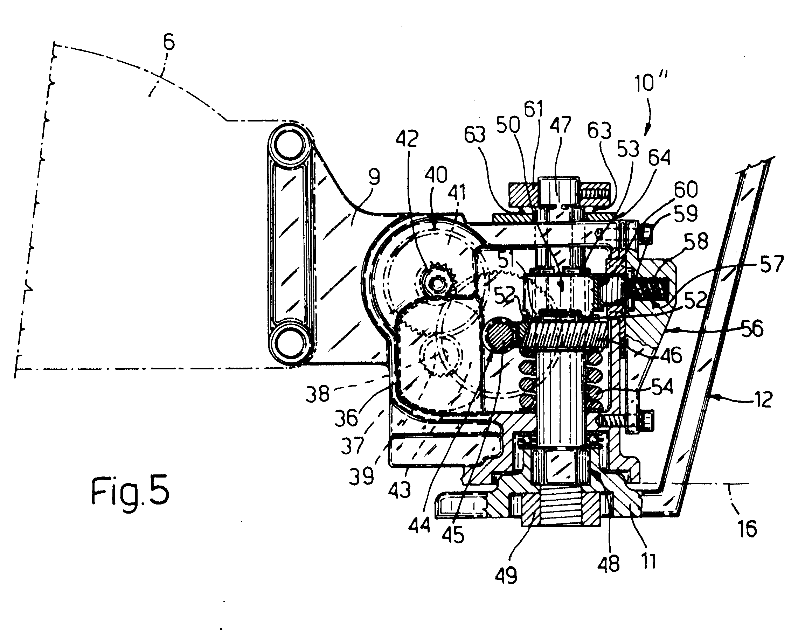

Reference is now made to Figure 5 which shows an electric fold-back module 10". It will be seen that the module 10" has a casing 36 fixed to the bracket 9 and housing a horizontal-axis, reversible electric motor 37, the distributor shaft 38 of which has a pinion 39 which transmits drive to a speed reducer 40. The latter includes a first large diameter toothed wheel 41 meshed with the pinion 39, and a second small diameter toothed wheel 42 meshed with a wheel 43 fixed for rotation with a shaft 44 having a worm screw portion 45. This portion 45 meshes with a gear 46 with helical teeth mounted on a vertical-axis shaft 47 projecting from the casing 36 at both ends. The shaft 47 is fixed to the arm 11 by a prismatic coupling 48 near the lower end of the shaft 47 itself. This end is threaded and an axial coupling nut is screwed onto it.

The gear 46 is freely rotatable on the shaft 47 and engages frontally with a second gear 50 fixed for rotation with the shaft 47 but slidable axially relative thereto. The gears 46, 50 are coupled to each other by frontal projections 51 on the gear 50 that engage in correspondingly-shaped recesses 52 in the gear 46. The shaft 47 has an upper axial stop 53 for the gear 50 which is normally held in abutment with this stop 53 and meshed with the gear 46 by a coil spring 54 located around the shaft 47 and compressed between the gear 46 and the casing 36.

A body 56 is fixed to a lateral portion of the casing 36 and has a cavity 57 housing a coil spring 58 which acts on a pin 59 which in turn bears against a surface of the gear 50 provided with a seat 60 of predetermined angular extent.

An annular body 61 is fixed to the upper portion of the shaft 47 for rotation therewith and carries a pair of sliding strip electrical contacts 63 on its underside which cooperate with the tracks of a corresponding printed circuit 64 fixed to the casing 36 and connected by wires, not shown, to a circuit which controls the electrical supply to the motor 37.

In this way, starting from a normal operating position, with the mirror positioned at 90 degrees to the side of the vehicle body 13, when one wants to fold back the mirror 1, one presses a command button to start the motor 37 whose rotation is transmitted to the worm screw 44 which is meshed with the gear 46 and causes the module 10″ to rotate around the shaft 47 until the tracks of the printed circuit 64 are positioned so as to cut the power to the motor 37. At the start of the rotation of the casing 36, the pin 59 comes out of the seat 60 and moves onto a portion of the gear 50 having a smaller radius that than of the seat so as to reduce the elastic force in the spring 58. When another command button is actuated the motor 37 is put into reverse and rotates in the opposite sense from that described above.

If, on the other hand, the mirror is folded back manually or by accident, the body 2, the casing 36, the worm screw 45 and the gear 46 pivot together about the shaft 47 so as to cause the gear 46 to be uncoupled from the gear 50, by the downward movement of the gear 46 against the action of the spring 54. At the same time, the pin 59 moves out of the seat 60 and slides on the lateral surface of the gear 50. The mirror may be returned to its normal position of use either by reversal of the mechanical operation just described or by electrical operation.

Obviously, in this case as well, as an alternative to the arrangement shown, the casing 36 and the bracket 9 may be fixed rigidly to a plate 6′.

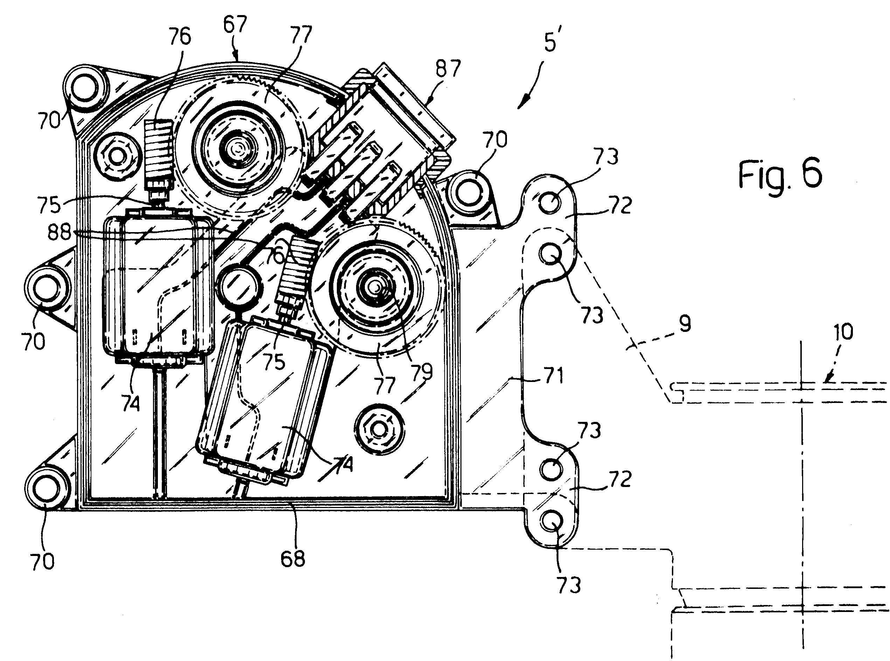

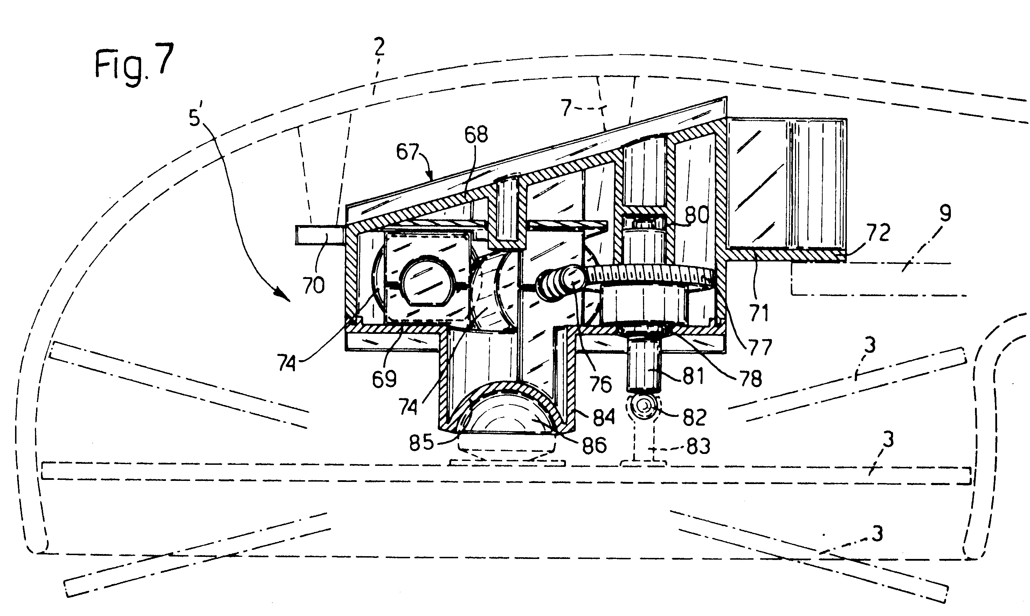

With reference to Figures 6 and 7, the electric orientation module 5′ will now be described. The module 5′ includes a casing 67 made up of a rear shell 68 (the bottom wall of which defines the plate 6) and a front cover 69. The rear shell 68 has a plurality of lugs 70, for fixing it to the hollow body 2 by the projections 7, and a lateral appendix 71 forming two lugs 72, an upper and a lower, each provided with two holes 73 for fixing the shell to the bracket 9. Specifically, to fix the shell to the bracket 9, one hole of each lug 72 is used, as shown by the broken line in Figure 6, but the arrangement of the holes allows the shell to be fixed to brackets of different dimensions. If, on the other hand, the fold-back module 5 incorporates the plate 6′, the latter would be fixed to the bottom wall of the rear shell 68, which in this case would not have the appendix 71 or its fixing elements.

Two electric motors 74 are fixed within the casing 67 and have worm screws 76 splined to their output shafts 75. These screws 76 mesh with respective gears 77 having internal threads 79. The gears 77 are supported at one end by the rear shell 68, which has two cylindrical seats 80 for this purpose, and at the other end by the cover 69 by means of holes 78. Respective threaded portions of pins 81 with rounded heads 82 engage in the internal threads 79 while the rounded heads 82 engage corresponding seats 83 provided in the back of the reflective plates 3.

The cover 69 has a central cylindrical projection 84 forming a hemispherical concave seat 85 housing a corresponding central convex hemispherical part 86 fixed to the back of the reflective plate 3 and forming a ball and socket joint with the seat 85.

In Figure 6, an electrical connector 87 can also be seen passing through the casing 67 in order to connect the supply cables 88 of the electric motors 74 to the electric power supply of the vehicle. In this way, by means of the screws 76, each motor 74 drives the respective gear 77 with an appropriately reduced angular velocity. The rotation of the internal thread 79 displaces the pin 81 axially and consequently rotates the reflective plate 3 about an axis passing substantially through the centre of the ball and socket joint 85, 86 and through the centre of the head 82. The combined rotation caused by the two motors 87 enables the position of the reflective plate 3 to be adjusted within a predetermined solid angle.

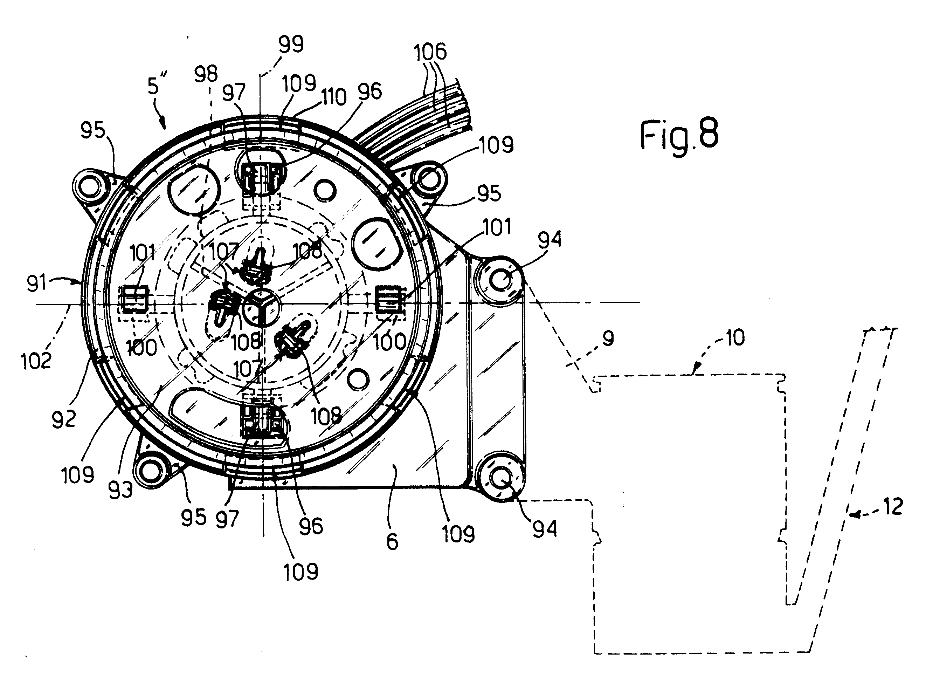

With reference to Figure 8, the Bowden-cable orientation module 5″ shown here includes a casing 91 made up of a fixed rear shell 92 (only partly shown in the drawing) and a movable front shell 93. The rear wall of the fixed shell 92 is rigid with the plate 6 which projects laterally from this wall and has holes 94 for fixing it to the bracket. Alternatively, in this case as well, the rear wall of the fixed shell 92 can be provided with means for fixing it to the plate 6′ if this is rigid with the bracket 9 instead of to the fixed shell 92. In addition, the rear wall of the fixed shell is provided with lugs 95 for fixing it to the projections 7 (not shown in the drawing).

The fixed shell 92, which is circular when seen from above and C-shaped in cross-section, is provided internally with two fork support elements 96 for the corresponding pivot pins 97 of cruciform element 98 (seen in the drawing only in ghost outline). The fork elements 96 and the pins 97 are aligned on an axis 99 that defines an axis of rotation of the cruciform element 98. Similar fork support elements 100 (shown only schematically in the drawing) are provided inside the movable shell 93 for supporting corresponding pivot pins 101. The fork elements 100 and the pivot pins 101 are also aligned on an axis 102, perpendicular to the axis 99 and defining an axis of rotation for the movable shell 93 relative to the cruciform element 98. As a result, the movable shell 93 is able to rotate relative to the fixed shell 92 about the two axes 99 and 102.

The movement of the movable shell 93 is controlled by means of three cables 106 whose far ends (not shown in the drawing) are fixed to a control element accessible from inside the vehicle. The other ends of the cables 106, which pass through the bottom walls of the shells 92, 93 at the three points at the vertices of an equilateral triangle, are fixed in appropriate seats 107 by means of terminals 108.

In order to allow the movement of the movable shell 93 but ensure that the two shells of the casing 91 remain interengaged, the lateral wall of the fixed shell 92, which surrounds the corresponding lateral wall of the movable shell 93, is provided with notches 109 while the two walls are surrounded by an resilient ring which holds them together.

The cables 106 are kept normally taut by known means so that, when the control element is activated, it causes the traction or release of the cables 106 and thereby the desired orientation of the movable shell 93 (and consequently that of the reflective plate 3 fixed to it).

The assembly of the mirror according to the invention is particularly simple as it requires only the interconnection of the modules 10 and 5, the fixing of the reflective plate 3 and the fixing to the arm 11 and to the hollow body 2.

The mirror as described gives the following advantages. First of all, the manufacturing of the internal structure to standard dimensions, the same for all types of mirror and for all types of vehicle to which the mirror is to be fitted, considerably reduces the cost of manufacturing and stocking components and also the cost of designing the mirror. This standardization also means that only a very small number of interchangeable modules need be prepared in order to fulfil the desired operational specifications. Despite this, the standardized mirror is able to comply with constraints relating to: the required field of visibility, safety standards, constancy of operating characteristics over time, streamlining, noise, application and driving comfort, while still providing the possibility of varying the outer shape or "design" of the mirror within wide limits.

Finally, it is clear that modifications and variations can be made to those embodiments described above without departing from the scope of the present invention. In particular, as already mentioned, the support plate can be part either of the fold-back module or of the orientation module, the orientation and fold-back modules cam be constructed differently, and all details can be replaced by technically equivalent alternatives.

## Claims

1. An exterior rear view mirror (1) for a motor vehicle, including an outer body (2), a reflective plate (3) housed in the said outer body, means (12) for fixing the mirror (1) to the bodywork (13) of a motor vehicle, and orientable support means (5,10) for the reflective plate (3) housed in the outer body (2), the said support means (5,10) being interposed between the said reflective plate (3) and the said fixing means (12) to enable the said outer body (2) and the said reflective plate (3) to pivot about a fold-back axis (14), characterised in that the centre (15) of the said reflective plate (3) is positioned at a predetermined distance from the said fold-back axis (14), the distance A between the said centre (15) and the said fold-back axis (14) along a transverse axis (X) of the vehicle being equal to A = 100mm ± 10%, the distance between the said centre (15) and a plane (16) perpendicular to the said fold-back axis (14) and defined by opposing surfaces of the said support means (5,10) and of the said fixing means (12) being equal to B = 50mm ± 20% and the distance C between the plane of the said reflective plate (3) and the said fold-back axis (14) being equal to 45 mm ± 20%.

2. A mirror according to Claim 1, characterised in that the said distances of the centre (15) are A = 100mm ± 5mm, B = 50mm ± 5mm and C = 45mm ± 5mm.

3. A mirror according to claims 1 or 2, characterised in that the said support means include a first fold-back module (10) for enabling the said outer body (2) to be folded back about the said fold-back axis, and a second plate support and orientation module (5) for enabling the orientation of the said reflective plate (3) to be changed.

4. A mirror according to Claim 3, characterised in that it includes two fold-back modules (10) comprising respectively a first, mechanical fold-back module (10′), and a second, electrical fold-back module (10″), the said mechanical fold-back module (10′) and the said electrical fold-back module (10″) being interchangeable.

5. A mirror according to claims 3 or 4, characterised in that it includes two support and orientation modules (5) comprising respectively a first, mechanical, cable-operated support and orientation module (5″) and a second, electrical support and orientation module (5′), the said mechanical support and orientation module (5″) and the said electrical support and orientation module (5′) being interchangeable.

6. A mirror according to any of Claims 3 to 5, characterised in that the said support and orientation module (5) is rigid with a support plate (6) fixable to the said outer body (2) and to the said fold-back module (10).

7. A mirror according to Claim 6, characterised in that the said support plate (6) has fixing lugs (72) provided with holes (73; 94) for screw engagement with corresponding portions (34) of a connecting bracket (9) rigid with the housing (27; 36) of the said fold-back module (10).

8. A mirror according to one of Claims 3 to 5, characterised in that the said fold-back module (10) is rigid with a support plate (6') fixable to the said outer body (2) and to the said support and orientation module (5).

Fig.1

Fig.2

Fig.3

Fig.4

Fig.5

Fig. 6

EP 0 531 944 A1

Fig. 7

EP 0 531 944 A1

Fig.8

EP 0 531 944 A1

**European Patent Office**

# EUROPEAN SEARCH REPORT

Application Number

EP 92 11 5353

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | WO-A-9 104 172 (IKU HOLDING MONTFOORT B.V.)<br>* page 5, line 24 - page 6, line 6; figures 1,2,16 * | 1,3 | B60R1/06 |
| Y | | 5-8 | |
| Y | DE-A-3 923 932 (MAGNA AUTECA, AUTOZUBEHÖRGESELLSCHAFT M.B.H.)<br>* abstract; figure 1 *<br>* column 3, line 60 - column 4, line 47 *<br>* column 6, line 50 - line 53 *<br>* column 7, line 12 - line 15 * | 5 | |
| Y | DE-A-4 011 934 (AISIN SEIKI K.K.)<br>* column 1, line 50 - line 60; figures *<br>* column 2, line 19 - column 3, line 24 * | 6,7 | |
| Y | EP-A-0 169 245 (ICHIKOH INDUSTRIES LTD)<br>* page 6, line 18 - page 7, line 9; figures 4,5 * | 8 | |
| | | | **TECHNICAL FIELDS SEARCHED (Int. Cl.5)**<br><br>B60R |

The present search report has been drawn up for all claims

| Place of search | Date of completion of the search | Examiner |
|---|---|---|
| THE HAGUE | 04 DECEMBER 1992 | DUBOIS B.F.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

14